# EUROPÄISCHE PATENTSCHRIFT

(11) **EP 1 315 129 B1**
(45) Veröffentlichungstag und Bekanntmachung des Hinweises auf die Patenterteilung: **24.02.2010**
(21) Anmeldenummer: 02026060.0
(22) Anmeldetag: 22.11.2002
(51) Int. Cl.: G07F 7/00, G07F 17/20, G07F 17/42

(54) **Verfahren zur Nutzung automatischer Anlagen**
Method for the use of automatic systems
Méthode d'utilisation d'installations automatiques

(30) Priorität: 23.11.2001 EP 01127895
(43) Veröffentlichungstag der Anmeldung: 28.05.2003
(73) Patentinhaber: Scheidt & Bachmann GmbH, D-41238 Mönchengladbach (DE)
(72) Erfinder: Miller, Norbert, Dr., 41063 Mönchengladbach (DE); Classen, Dieter, Dipl.-Ing., 41352 Korschenbroich (DE)
(74) Vertreter: Stenger, Watzke & Ring

(56) Entgegenhaltungen:
- WO-A-00/30045
- WO-A-01/45061
- WO-A-96/06415
- WO-A-97/14123
- DE-A- 10 005 487
- US-A- 3 824 544
- US-B1- 6 193 154

## Beschreibung

Die vorliegende Erfindung betrifft ein Verfahren zur Berechtigung von Nutzern von in einem Ortsbereich einer Zahlstation positionierter automatischer Anlagen, wobei der Nutzer unter Auswahl und Bezahlung einer geplanten Nutzungsart an der Zahlstation einen Nutzungscode mit einer Zeitinformation empfängt, welcher vom Benutzer in die automatische.Anlage eingegeben wird, woraufhin ein Rechner der automatischen Anlage die Gültigkeit des Nutzungscodes prüft und die Anlage für die gewählte Nutzung freigibt.

Automatische Anlagen im Ortsbereich von Zahlstationen und deren selbständige Nutzung durch die Nutzer in Abhängigkeit von vorhergehenden Zahlvorgängen sind an sich bekannt. Beispielsweise werden auf Tankstellen Waschanlagen, Ölautomaten und dergleichen derart betrieben, daß der Nutzer an einer Zahlstation die gewünschte Nutzung auswählt, bezahlt und einen Chip, eine Speicherkarte oder dergleichen erhält. Diese gibt der Nutzer im Bereich der automatischen Anlage in einen Prüfrechner ein, welcher anhand des eingegebenen Datenträgers die Nutzungsart bestimmt und die automatische Anlage für die gewählte Nutzung freigibt.

Ein Nachteil der vorbekannten Verfahren besteht in der Aufwendigkeit in bezug auf die Beschaffung und Bereithaltung der Datenträger sowie in der Auslegung der Datenträgerausleseanlagen im Bereich der automatischen Anlagen. Sämtliche Verfahren, seien es Magnetstreifenleser, Chipkartenleser oder dergleichen erfordern aufwendige Vorrichtungen zum Einziehen und Auslesen sowie zum Speichern der Datenträger. Darüber hinaus sind derartige Datenträger bekanntermaßen manipulierbar und die Speicherorte für die Datenträger im Bereich der automatischen Anlagen gegen äußere Eingriffe nur schlecht gesichert.

Ausgehend vom vorbeschriebenen Stand der Technik liegt der vorliegenden Erfindung die **Aufgabe** zugrunde, ein Verfahren zur Berechtigung von Nutzern zur Nutzung von in einem Ortsbereich einer Zahlstation positionierter automatischer Anlagen anzugeben, bei welchem der Aufwand in bezug auf Beschaffung und Bereithaltung von Datenträgern ebenso entfällt wie die Notwendigkeit aufwendiger Ausleseeinrichtungen im Bereich der automatischen Anlagen. Darüber hinaus soll die Sicherheit derartiger Anlagen erhöht werden.

Zur technischen **Lösung** der Aufgabe wird vorgeschlagen, daß der Nutzungscode unter Verwendung einer Tabelle mit gültigen Codes erstellt und mit einer Zeitinformation versehen wird, wobei diese Tabelle sowohl in der Zahlstation als auch in der automatischen Anlage vorliegt, und der Nutzungscode aus der Tabelle in der automatischen Anlage nach seiner Verwendung in der automatischen Anlage gelöscht wird und aus der Tabelle in der Zahlstation nach seiner Ausgabe durch die Zahlstation gelöscht wird.

Die Erfindung basiert auf der einfachen Übertragung eines Nutzungscodes. Dieser kann gemäß einem vorteilhaften Vorschlag der Erfindung an der Zahlstation einfach ausgedruckt werden, beispielsweise auf der Quittung. In erfindungsgemäßer Weise braucht die automatische Anlage nurmehr mit einem Tastenfeld versehen sein, beispielsweise auch in Form eines Touchscreens, so daß der Nutzer lediglich den ihm mitgeteilten Code eingibt und ein Rechner der automatischen Anlage nach Prüfung der Gültigkeit Nutzungscodes die Anlage für die gewünschte Nutzung freigibt. Die Prüfung auf Gültigkeit des Nutzungscodes wird zusätzlich vorteilhaft anhand der Zeitinformation durchgeführt. Mittels der Zeitinformation können Nutzungszeiträume und/oder auch Verfallszeiträume zur Verwendung des Nutzungscodes vorgegeben werden. So können beispielsweise Nutzungscodes für unterschiedliche Nutzungszeiträume zu verschiedenen Preisen ausgegeben werden. In einem Zeitraum einer hohen Frequentierung durch Kunden können beispielsweise nur Nutzungscodes eines entsprechenden Preisniveaus zugelassen sein, während in einem Zeitraum niedriger Frequentierung durch Kunden ein entsprechend preiswerterer Nutzungscode zugelassen wird. Die Zeitinformation kann zum Beispiel eine Reihenfolge von den Automaten bedienenden Nutzern vorgeben. Streit zwischen den Nutzern, wer als Nächster seinen Nutzungscode eingeben darf, kann vermieden werden.

Es wird ferner vorgeschlagen, daß der Nutzungscode dem Nutzer in Form eines Ausdrucks übergeben wird. Der Nutzungscode kann aus einer Zeichenkette bestehen, die vom Nutzer manuell oder auch akustisch, beispielsweise durch Spracheingabe, in die Eingabeeinheit eingegeben wird. Der Ausdruck kann beispielsweise durch einen entsprechend des Nutzungscodes bedruckten Papierstreifens gebildet sein.

In einer weiteren Ausgestaltung wird vorgeschlagen, daß der Nutzungscode dem Nutzer in Form einer elektronischen Nachricht über ein Mobilfunkendgerät des Nutzers übermittelt wird. Ein Ausdruck oder dergleichen kann eingespart werden. Gegenüber dem Ausdruck hat diese Ausgestaltung den Vorteil, daß der Nutzungscode nicht versehentlich verlegt oder gar verloren werden kann, da einem Mobilfunkendgerät in der Regel mehr Aufmerksamkeit zukommt als einem Ausdruck, beispielsweise auf einem Papierzettel. Auch der Einfluß anderer Widrigkeiten wie Wind oder dergleichen kann reduziert werden.

Gemäß einer vorteilhaften Weiterbildung wird als elektronische Nachricht eine SMS verwendet. So kann ein bereits bestehendes Nachrichtensystem zur Übermittlung des Nutzungscodes verwendet werden. Kosten und Aufwand für Übermittlungseinrichtungen können vermieden werden. Zum Beispiel kann von einer Zahlstation nach vorheriger Zahlung des entsprechenden Betrags eine SMS über eine vom Benutzer vorgebbare Mobilfunknummer an ein Mobilfunkendgerät des Benutzers übermittelt werden.

Darüber hinaus wird vorgeschlagen, daß eine MMS als elektronische Nachricht übermittelt wird. So kann der Nutzungscode auch graphische Bestandteile aufweisen, durch die zum Beispiel die Authentizität geprüft werden kann. Darüber hinaus kann eine Anzeigeeinheit des Mobilfunkendgeräts dazu verwendet werden, den graphischen Nutzungscode, wie zum Beispiel ein Barcode, anzuzeigen, so daß dieser durch eine Leseeinheit des Automaten lesbar ist. Eine unberechtigte Manipulation kann somit weiter erschwert werden. Es ist für den Nutzer nicht notwendig, den Nutzungscode selbst einzugeben.

Durch die Erfindung entfällt das Erfordernis der Beschaffung und Bereithaltung von Datenträgern ebenso wie die aufwendige Auslesestation seitens der automatischen Anlage. Darüber hinaus kann vorgesehen sein, daß ein verwendeter Nutzungscode nur ein einziges Mal verwendet werden kann. Diese Nutzungscodes werden verbraucht, stehen also nicht mehr für unberechtigte Nutzungen zur Verfügung. Darüber hinaus kann durch geeignete Codeauswahl und/oder Codierungsstrategien die Gefahr einer mißbräuchlichen Nutzung deutlich reduziert werden.

In vorteilhafter Weise enthält der Nutzungscode eine codierte Zeitinformation, so daß die Zeitinformation nicht oder nur mit erheblichem Aufwand manipulierbar ist. So kann vermieden werden, daß beispielsweise ein für einen festen Zeitraum vorgegebener Nutzungscode für die Verwendung in einem anderen Zeitraum unberechtigt freigegeben wird.

Für die Überprüfung der Gültigkeit des Nutzungscodes stehen verschiedene Möglichkeiten alternativ oder zusammenwirkend zur Verfügung. Ist die automatische Anlage bzw. deren Rechner in einer dauernden oder zumindest zeitweisen online-Verbindung mit einem Rechner der Zahlstation, kann die Gültigkeit des Nutzungscodes direkt im Abgleich zwischen den Rechnern ermittelt werden, da der Rechner der Zahlstation den Nutzungscode innerhalb des Gültigkeitszeitraumes erstellt hat. Insbesondere eignet sich die Erfindung aber auch für nicht vernetzte Systeme. Hier können synchronisierte Datenbanken einerseits auf Seiten der Zahlstation für die Erstellung und Ausgabe des Nutzungscodes und andererseits auf Seiten der automatischen Anlage für die Bestimmung der Nutzungsart und die Freigabe der Anlage genutzt werden. Auch können die Codierungen derart gebildet sein, daß der anlagenseitige Rechner mittels einer auf die Erstellungssoftware abgestimmten Interpretationssoftware die Gültigkeit des Codes überprüfen kann.

Der Code kann beispielsweise Informationen zur Nutzungsart, zum Beispiel eine Waschprogrammnummer oder dergleichen, eine Stationsidentifikationsnummer, einen Zeitstempel, eine Verfallsgrenze und dergleichen enthalten.

In vorteilhafter Weise können die Codes verschlüsselt sein, wobei sich beispielsweise aktuelle "3DES"-Codierungen eignen, die sich anlagenseitig decodieren und interpretieren lassen.

Eine Scannereinheit zur automatischen Auslesung einer Codefolge oder Erkennung eines Barcodes kann mit einfachen Mitteln anlagenseitig eingebaut werden, um gegebenenfalls das Eintippen langer Codes vermeiden oder erleichtern zu können. Allerdings sind derartige zusätzliche Einheiten bereits anlagenseitig aufwendig und stellen nur eine Ausführungsform der Erfindung dar.

Das erfindungsgemäße Verfahren vereinfacht die Abwicklung zum Betrieb automatischer Anlagen und den Aufwand in bezug auf Datenträger einerseits und Leseeinheiten sowie Speichervorrichtungen für die Datenträger erheblich. Automatische Anlagen dieser Betriebsweise werden durch die Erfindung erheblich wirtschaftlicher und einfacher, so daß die Störanfälligkeit und der Erwartungsbedarf reduziert werden. Auch ist die Sicherheit verbessert.

Das erfindungsgemäße Verfahren eignet sich für eine große Vielzahl von automatischen Anlagen, seien es Betriebsanlagen wie Waschstraße bzw. -hallen, Ölautomaten, Reinigungsautomaten, aber auch Warenausgabeautomaten und dergleichen können in der beschriebenen Verfahrensweise eingesetzt werden.

Weitere Vorteile und Merkmale der Erfindung ergeben sich aus der folgenden Beschreibung anhand der Figuren. Dabei zeigt:
- Fig. 1: eine schematische Darstellung eines Ablaufes gemäß dem erfindungsgemäßen Verfahren und
- Fig. 2: eine schematische Darstellung eines Ablaufs gemäß dem erfindungsgemäßen Verfahren unter Verwendung eines Mobilfunktelefons.

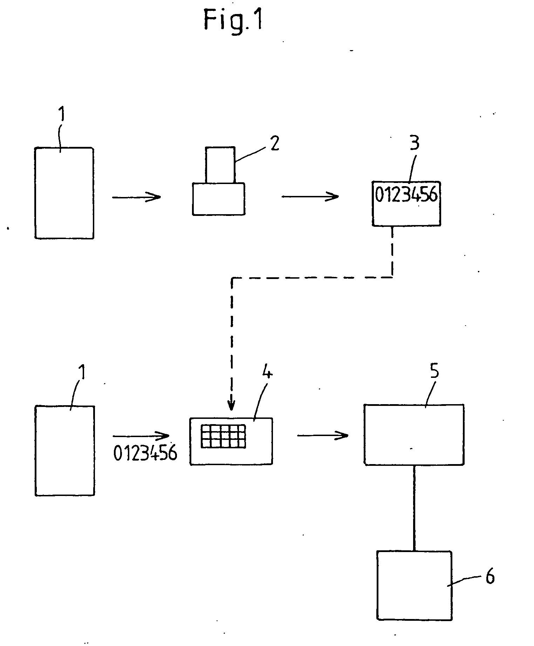

Gemäß Fig. 1 wird durch eine Benutzung einer nicht gezeigten automatischen Anlage beabsichtigende Person 1 im Bereich einer Zahlstation 2 die Nutzungsart ausgewählt, beispielsweise ein Waschprogramm für ein Kraftfahrzeug oder dergleichen und bezahlt. Die Zahlstation 2 gibt daraufhin in gedruckter Form einen Nutzungscode 3 aus, der mittels eines nicht gezeigten Rechners von der Zahlstation festgelegt ist. Dieser Code umfaßt Programminformationen, Informationen zur Identifizierung der automatischen Anlage sowie beispielsweise Zeitinformationen.

Der Nutzer 1 bewegt sich zu der zur Nutzung geplanten automatischen Anlage und gibt dort beispielsweise in einem Tastaturfeld 4 den empfangenen Code ein, den er von dem Ausdruck abliest und eintippt. Mittels eines Rechners, symbolisiert durch den Bereich 5, wird die Gültigkeit des Nutzungscodes überprüft, beispielsweise durch Zerlegung des Codes, Entnahme der Identifikation, Programminformationen und dergleichen. Im Falle eines positiven Prüfungsergebnisses wird die Steuerungseinheit 6 der automatischen Anlage für die erwünschte Nutzung freigegeben bzw. zur Freigabe angesteuert.

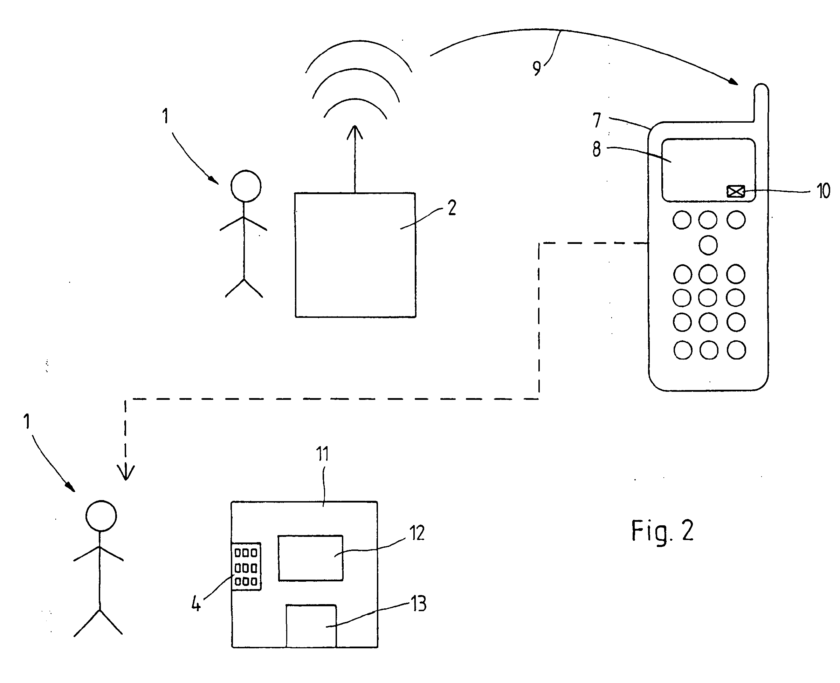

Fig. 2 zeigt einen weiteren erfindungsgemäßen Ablauf, bei dem ein Nutzer 1 an einer Zahlstation 2 eine Ware, zum Beispiel ein Getränk, auswählt und bezahlt. Die Zahlstation übermittelt einen Nutzungscode über das GSM-Netz 9 an ein Mobilfunktelefon 7 des Nutzers 1. Auf einer Anzeige 8 des Mobilfunktelefons 7 erscheint eine Meldung 10, daß eine SMS empfangen wurde. Der Nutzer 1 öffnet diese Nachricht und gibt den darin angegebenen Nutzungscode über die Tastatur 4 eines Warenautomaten 11 ein. Eine Prüf- und Steuereinheit 12 des Warenautomaten 11 prüft den Nutzungscode und ermittelt die darin codiert enthaltene Zeitinformation. Sodann wird geprüft, ob der Nutzungscode noch gültig ist und dessen Verwendung im vorgegebenen Zeitintervall erfolgt. Sind die Bedingungen erfüllt, wird die Ware an einer Ausgabe 13 des Warenautomaten 11 ausgegeben.

Der Nutzungscode besteht in diesem Ausführungsbeispiel aus einer 10 Zeichen umfassenden Buchstaben-Ziffern-Kombination, wobei nur ein kleiner Bruchteil der kombinatorisch möglichen Nutzungscodes als gültige Codes in einer Tabelle abgelegt sind, die sowohl in der Zahlstation 2 als auch in der automatischen Anlage 11 vorliegt. Ein Nutzer erhält jeweils einen Nutzungscode für eine Nutzung. Nachdem ein Nutzungscode vergeben worden ist, wird dieser aus der Tabelle der Zahlstation entfernt. Dies erfolgt ebenso bei den automatischen Anlagen, die über eine gleiche Tabelle verfügen, wenn die Nutzung aktiviert wird. So ist sichergestellt, daß ein Nutzungscode nur einmal verwendet werden kann. Da nur eine sehr kleine Anzahl an gültigen Codes in der Tabelle enthalten ist, die in diesem Beispiel stochastisch verteilt sind, ist die Möglichkeit einer unberechtigten Manipulation verschwindend gering. Darüber hinaus werden in vorgebbaren Zeitabständen die Tabellen ausgetauscht gegen Tabellen mit neuen Nutzungscodes, wobei die noch nicht verwendeten Nutzungscodes in den vorhergehenden Tabellen ebenfalls verworfen werden.

In einer weiteren Ausgestaltung sind neben einer Zahlstation mehrere automatische Anlagen vorgesehen. In jeder automatischen Anlage liegt eine andere Tabelle mit Nutzungscodes vor, so daß ein Nutzungscode nur an einer automatischen Anlage eingesetzt werden kann. In der Zahlstation liegen die Tabellen aller automatischen Anlagen vor, wobei kein Nutzungscode mehrfach in den Tabellen enthalten ist. Auch hier werden die verwendeten Nutzungscodes aus den jeweiligen Tabellen entfernt.

Gemäß einer weiteren Ausgestaltung liegen in der Zahlstation und in der automatischen Anlage mehrere Tabellen mit unterschiedlichen Nutzungscodes vor, deren Verwendung im Zeitmultiplex aufeinander abgestimmt umgeschaltet wird. Dabei ist in dieser Ausgestaltung ein Zeitversatz zwischen Zahlstation und automatischer Anlage vorgesehen, damit ein ausgegebener Nutzungscode noch mit hinreichender Sicherheit bei Eingabe in die automatische Anlage die beabsichtigte Nutzung ermöglicht. Ein Nutzungscode kann daher nur solange die gewünschte Nutzung ermöglichen, wie ein Umschalten der Tabellen noch nicht ausgeführt worden ist. Ein solcher Betrieb kann auch mit mehreren automatischen Anlagen vorgesehen sein, wobei in jeder automatischen Anlage jeweils eine andere Tabelle aktiv ist als in allen anderen. Auch hier werden die Tabellen aufeinander abgestimmt umgeschaltet.

Die beschriebenen Ausführungsbeispiele dienen nur der Erläuterung und sind nicht beschränkend.

### Bezugszeichenliste

- 1: Nutzer
- 2: Zahlstation
- 3: Codeausdruck
- 4: Tastaturfeld
- 5: Überprüfungseinheit
- 6: Steuereinheit
- 7: Mobilfunktelefon
- 8: Anzeigeeinheit
- 9: GSM-Netz
- 10: SMS-Nachricht
- 11: Warenautomat
- 12: Prüf- und Steuereinheit
- 13: Ausgabe

## Patentansprüche

1. Verfahren zur Berechtigung von Nutzern zur Nutzung von in einem Ortsbereich einer Zahlstation (2) positionierten automatischen Anlagen (11), wobei der Nutzer unter Auswahl und Bezahlung einer geplanten Nutzungsart an der Zahlstation (2) einen Nutzungscode (3) empfängt, welcher vom Benutzer in die automatische Anlage (11) eingegeben wird, woraufhin ein Rechner (5) der automatischen Anlage die Gültigkeit des Nutzungscodes prüft und die Anlage für die gewählte Nutzung freigibt,
**dadurch gekennzeichnet,**
**daß** der Nutzungscode (3) unter Verwendung einer Tabelle mit gültigen Codes erstellt und mit einer Zeitinformation versehen wird, wobei diese Tabelle sowohl in der Zahlstation (2) als auch in der automatischen Anlage (11) vorliegt, und der Nutzungscode aus der Tabelle in der automatischen Anlage (11) nach seiner Verwendung in der automatischen Anlage (11) gelöscht wird und aus der Tabelle in der Zahlstation (2) nach seiner Ausgabe durch die Zahlstation (2) gelöscht wird.

2. Verfahren nach Anspruch 1, **dadurch gekennzeichnet, daß** der Nutzungscode (3) dem Nutzer in Form eines Ausdrucks übergeben wird.

3. Verfahren nach Anspruch 1 oder 2, **dadurch gekennzeichnet, daß** der Nutzungscode (3) dem Nutzer in Form einer elektronischen Nachricht über ein Mobilfunkendgerät (7) des Nutzers übermittelt wird.

4. Verfahren nach Anspruch 3, **dadurch gekennzeichnet, daß** eine SMS als elektronische Nachricht verwendet wird.

5. Verfahren nach Anspruch 3, **dadurch gekennzeichnet, daß** eine MMS als elektronische Nachricht verwendet wird.

6. Verfahren nach einem der vorhergehenden Ansprüche, **dadurch gekennzeichnet, daß** der Nutzungscode an der automatischen Anlage (11) mittels eines Tastenfeldes (4) eingegeben wird.

7. Verfahren nach einem der vorhergehenden Ansprüche, **dadurch gekennzeichnet, daß** eine codierte Zeitinformation verwendet wird.

8. Verfahren nach einem der vorhergehenden Ansprüche, **dadurch gekennzeichnet, daß** der Nutzungscode (3) an der Zahlstation (2) verschlüsselt und an der automatischen Anlage (11) entschlüsselt wird.

9. Verfahren nach einem der vorhergehenden Ansprüche, **dadurch gekennzeichnet, daß** der Nutzungscode (3) dem Nutzer in automatisch lesbarer Form übergeben wird.

10. Verfahren nach Anspruch 9, **dadurch gekennzeichnet, daß** der Nutzungscode (3) in Form eines Barcodes übergeben wird.

## Claims

1. Method for authorizing users to use automatic systems (11) positioned within the local area of a pay station (2), wherein the user who selects and pays a planned kind of use receives at the pay station (2) a use code (3) which the user inputs in the automatic system (11), whereupon a computer (5) of the automatic system verifies the use code for validity and enables the system for the selected use,
**characterized in**
**that** the use code (3) is generated and provided with time information using a table with valid codes, wherein this table is present both in the pay station (2) and in the automatic system (11), and that after its use in the automatic system (11) the use code is deleted from the table in the automatic system (11) and from the table in the pay station (2) after its output from the pay station (2).

2. Method according to claim 1, **characterized in that** the use code (3) is handed out to the user in the form of a printout.

3. Method according to claim 1 or 2, **characterized in that** the use code (3) is communicated to the user in the form of an electronic message via a user's mobile radio terminal (7).

4. Method according to claim 3, **characterized in that** a SMS is used as an electronic message.

5. Method according to claim 3, **characterized in that** a MMS is used as an electronic message.

6. Method according to one of the preceding claims, **characterized in that** the use code is input at the automatic system (11) by means of a key pad (4).

7. Method according to one of the preceding claims, **characterized in that** a coded time information is used.

8. Method according to one of the preceding claims, **characterized in that** the use code (3) is encoded at the pay station (2) and decoded at the automatic system (11).

9. Method according to one of the preceding claims, **characterized in that** the use code (3) is communicated to the user in an automatically readable form.

10. Method according to claim 9, **characterized in that** the use code (3) is communicated in the form of a bar code.

## Revendications

1. Procédé pour l'autorisation d'utilisateurs à utiliser des installations automatiques (11) positionnées dans une zone locale d'un poste de paiement (2), l'utilisateur recevant un code d'utilisation (3) en sélectionnant et en payant au poste de paiement (2) un type d'utilisation prévu, code qui est entré par l'utilisateur dans l'installation automatique (11), ce après quoi un ordinateur (5) de l'installation automatique vérifie la validité du code d'utilisation et débloque l'installation pour l'utilisation sélectionnée,
**caractérisé en ce**
**que** le code d'utilisation (3) est mis au point en utilisant un tableau avec des codes valides et est doté d'une information de temps, ce tableau étant présent dans le poste de paiement (2) aussi bien que dans l'installation automatique (11) et le code d'utilisation étant effacé du tableau dans l'installation automatique (11) après son utilisation dans l'installation automatique (11) et étant effacé du tableau dans le poste de paiement (2) après sa sortie par le poste de paiement (2).

2. Procédé selon la revendication 1, **caractérisé en ce que** le code d'utilisation (3) est remis à l'utilisateur sous forme d'imprimé.

3. Procédé selon la revendication 1 ou 2, **caractérisé en ce que** le code d'utilisation (3) est remis à l'utilisateur sous forme de message électronique par un appareil terminal de téléphonie mobile (7) de l'utilisateur.

4. Procédé selon la revendication 3, **caractérisé en ce qu'**un SMS est utilisé comme message électronique.

5. Procédé selon la revendication 3, **caractérisé en ce qu'**un MMS est utilisé comme message électronique.

6. Procédé selon l'une des revendications précédentes, **caractérisé en ce que** le code d'utilisation est entré dans l'installation automatique (11) au moyen d'un clavier (4).

7. Procédé selon l'une des revendications précédentes, **caractérisé en ce qu'**une information de temps codée est utilisée.

8. Procédé selon l'une des revendications précédentes, **caractérisé en ce que** le code d'utilisation (3) est codé au poste de paiement (2) et décodé à l'installation automatique (11).

9. Procédé selon l'une des revendications précédentes, **caractérisé en ce que** le code d'utilisation (3) est remis à l'utilisateur sous forme lisible automatiquement.

10. Procédé selon la revendication 9, **caractérisé en ce que** le code d'utilisation (3) est remis sous forme d'un code-barres.
